(19) Europäisches Patentamt
European Patent Office
Office européen des brevets

(11) EP 1 378 841 A1

(12) EUROPEAN PATENT APPLICATION

(43) Date of publication:
**07.01.2004 Bulletin 2004/02**

(51) Int Cl.[7]: **G06F 17/50**, H04L 12/56, G06N 3/12

(21) Application number: **02254649.3**

(22) Date of filing: **02.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **BRITISH TELECOMMUNICATIONS public limited company**
**London EC1A 7AJ (GB)**

(72) Inventor: **The designation of the inventor has not yet been filed**

(74) Representative:
**Lidbetter, Timothy Guy Edwin et al**
**BT Group Legal Services,**
**Intellectual Property Department,**
**8th Floor, Holborn Centre,**
**120 Holborn**
**London EC1N 2TE (GB)**

# (54) Method and apparatus for routing optimisation

(57) The invention relates to optimisation methods and apparatus, and finds particular application in problems that are constrained by more than one objective, such as communications network routing, network design, scheduling, capacity planning, resource allocation, and supply chain management, among others. In particular, embodiments of the invention are concerned with reducing the computational complexity associated with ranking solutions to such problems with respect to one another.

Embodiments involve an initial ordering process, wherein the performance of a solution, on all of its objectives, is evaluated, and compared between solutions. In a preferred embodiment, the performance of a solution is evaluated by calculating the distance (in all dimensions) of the evaluated solution, considered as a point in multi-objective space, from the origin of the multi-objective space. The solutions are then preferably arranged as a function of their calculated distance values. Known methods, such as "Quicksort", "Bubble sort", "Shell sort", "Merge sort" or "Heap sort" (described in "Algorithms in C$^{++}$", third Edition, Sedgewick, 1998) can be used to order the solutions as a function of the calculated distance. The ordering of solutions is such that whichever solution is closest to the origin is placed first, and whichever solution is furthest from the origin is placed last, in, e.g., a list of the solutions. The computational time incurred by this ordering is approximately $O$ ($N^2$)

Subsequently, the list of ordered solutions is input to a ranking process (which utilizes a conventional ranking process such as that described in NSGA). Since the first solution in the list is, by definition, on the Pareto front, then in order to identify solutions in the first level, the solutions only have to be compared against that first solution in the list. Essentially, therefore, the first solution in the list is the benchmark for the Pareto front. Moreover, once those solutions that are not dominated by the first solution, and are thus also lie on the Pareto front, have been identified and removed from the list, the first solution of those remaining in the list will be, by definition, on the second level Pareto front.

Conventional Multiobjective genetic algorithm methods incur a computational time of $O$ ($mN^3$) (where m denotes objectives, N denotes population size). Since the invention has removed the need to compare all solutions with all other solutions, the computational time involved with comparing solutions with the first solution in the list is now reduced to $O$ ($mN^2$), which is a significant improvement compared to other known methods.

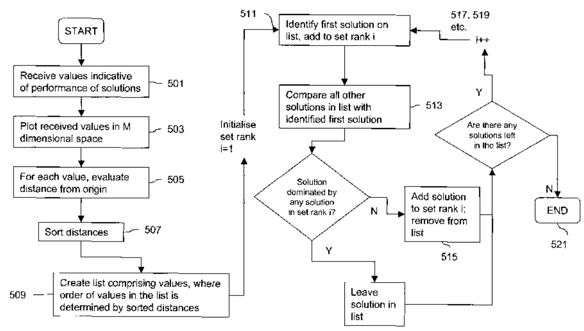


Fig 5

EP 1 378 841 A1

## Description

The present invention relates to optimisation methods and apparatus, and finds particular application in communications network routing, network design, scheduling, capacity planning, resource allocation, and supply chain management, among others.

Many problems involve multiple, often conflicting, measures of performance, which are required to be optimised simultaneously. For example, the problem of routing calls across a network may have at least two objectives: minimise cost and maximise reliability. If each of these objectives were to be optimised independently, as single-objective problems, it is likely that optimal performance for one objective would produce unacceptably low performance in the other. Thus a suitable solution to problems having conflicting objectives should offer acceptable performance in all objective dimensions.

Most real-world multi-objective problems, just as most real-world single-objective problems, are "NP" type problems. This means that no algorithm is known to exist which can guarantee optimal results in a reasonable amount of time; as a result "approximate methods" are required to solve the problems. As most of the "real-world" problems fall within the category of NP-hard problems (a subset of "NP" problems, which indicates that these problems are particularly hard to solve), and thus rely on approximate methods for a solution thereto, this makes the need for good approximate methods for multi-objective problems especially important.

The following knapsack example (the knapsack problem is described in S. Martello and P. Toth. Knapsack Problems: Algorithms and Computer Implementations. Wiley, Chichester, West Sussex, England, 1990) illustrates a simple multi-objective problem. In this example there are 3 knapsacks and 5 items to be placed in each knapsack. Assuming the weights associated with each knapsack are respectively

2,5,8,6,7   1,4,2,8,6   1,1,4,5,3

profits associated with these weights are respectively

4,5,6,7,2   7,4,2,5,2   1,3,6,4,7

and the constraints on the knapsack weights are respectively 14, 10, 7, then for a solution vector to this problem of x = 0,1,1,0,0, the solution vector has a weight vector = 13,6,5. An evaluation function associated with this problem thus identifies that this solution vector obeys all the constraints and has a profit vector = 11,6,9 (the terms used in the example are defined in the Glossary section below).

The objective is to identify a solution vector (x) that gives a better profit than this on ALL objectives without exceeding the weight constraint of any objective. If there is such a solution vector then that solution vector is said to "dominate" the current one. If there is no such solution vector (checking every possible solution) then this solution vector is Pareto optimal, i.e. it is ONE of the non-dominated solution vectors.

Aspects of existing multi-objective optimisation methods are reviewed below, following a glossary section.

Glossary of terms:

### *Optimisation*

Searching through a collection of possible solutions, usually under time constraints, with the aim of finding the best possible solution(s) according to (a) predetermined objective(s) (e.g. cost, reliability etc.).

### *Multi-objective problems*

A problem in which the measure of a solution's quality is a vector of values relating to two or more objectives.

### *Solution form*

As described above, a solution is referred to as X. A solution may be a vector of values (or a sequence of values), for example represented as binary values, in a *chromosome,* each binary value in the chromosome being a *gene,* and each gene having a value referred to as an *allele.*

### *Population based schemes/methods (Genetic algorithms)*

A population of *parent* solutions interact with each other to produce a population of *child* (or *offspring)* solutions: the selection of parent solutions for interaction is often dependent on their respective *fitness* (see below), and the scheme by which they interact (e.g. type of cross-over) is dependent on the problem. In addition to inter-solution interactions, mutations, selected randomly, can be applied to the children. The new population of offspring solutions is then considered as a population of parents for the next iteration of the method. This is repeated many times in search of (a) solution(s) having optimal fitness.

Effecting interaction between parent solutions can be described as applying a *recombination operator* to the parent solutions.

***Evaluation function***

A problem-specific function that evaluates the quality of a solution to a problem.

***Fitness***

A relative measure of how good a solution is *relative to other solutions.* Fitness is assigned to solutions, and for genetic algorithms (GA), is generally related both to the evaluation of the solution of interest and to the other solutions in the current population: e.g. for single-objective problems, rank solutions in order of quality, then assign fitness in a decreasing order. Fitness can also be used to decide which solutions should be parents: in most GA schemes, the better quality solutions may be given more opportunities to interact (e.g. mate) and generate child solutions.

***Search Space***

Range of valid solutions that can be assessed, via the corresponding evaluation function, for solution quality.

***Multi-objective Pareto method***

The evaluation function corresponding to a multi-objective problem may be expressed as a vector e.g. $\mathbf{f}(x) = (f_1(x) .... f_m(x))$. In order to compare evaluation functions between solutions, and thus to assign fitness to solutions, the whole vector is compared between solutions. For example, in the context of a maximisation problem for a pair of solutions, $x = \alpha$, $x= \beta$, four outcomes are possible:

1. $\alpha$ is not worse on any objective than $\beta$ and is better on at least one
   i.e. $f_1(\alpha) > = f_1(\beta)$, $f_2(\alpha) > = f_2(\beta)$, $f_n(\alpha) > f_n(\beta)$
   In this situation, $\alpha$ is said to *dominate* $\beta$
2. $\beta$ *dominates* $\alpha$*;*
3. The solutions or at least the $f_k(i)$ are identical for $\alpha$ and $\beta$;
4. $\alpha$ and $\beta$ are nondominated i.e. $f_1(\alpha) > f_1(\beta)$, but $f_2(\beta) > f_2(\alpha)$

Figure 1 shows a two dimensional representation of evaluated solutions $\alpha$, $\delta$ and $\beta$ and which are nondominated with respect to one another; any solutions whose objective value falls within the shaded areas will be nondominated with respect to solution $\beta$. All of the evaluated solutions falling outside of the shaded regions (here $\lambda,\kappa,\upsilon$) are dominated by solution $\beta$. This comparison method is known as *"Pareto Dominance".* In multi-objective optimisation, the overall aim is to identify a collection of solutions that are not dominated by any others (including each other). Such identified solutions are said to lie on the so-called *"Pareto front".* Pareto dominance is discussed in detail in the following review paper: *An Updated Survey of GA-Based Multiobjective Optimization Techniques (1998),* Carlos A. Coello Coello, published in ACM Computing Surveys.

Nondominated solutions can be identified by carrying out the following method (Goldberg ((1989) Genetic algorithms in search, optimization and machine learning, Reading, MA, Addison-Wesley):

Step 0: i = 0; (i represents counter identifier; j represents objective)
Step 1: For all $j \neq i$ solutions compare $X_i$ and $X_j$ for domination using conditions 1 - 4 for all objectives
Step 2: If for any j, $X_i$ is dominated by $X_j$, mark $x_i$ as "dominated"
Step 3: If all solutions have been considered, go to step 4, else increment i and go to step 1
Step 4: All solutions that are not marked "dominated" are non-dominated solutions, and lie on the Pareto front.

The ranking method described above is known as the Multi-objective Genetic Algorithm (MOGA). As part of the so-called MOGA methods, the Pareto-dominance method is employed to assign fitness values to solutions based on relative dominance. Comparing solutions to see which is dominant always involves looking at all of the objectives at once. In the MOGA method, the population of solutions is reproduced in accordance with the fitness values. Since individual solutions in the first level have maximum fitness value, they are reproduced more frequently than the others.

A population of solutions can be classified into groups of different non-domination *levels,* a first of which is identified when steps 0 - 4 are applied for the first time to a population. In order to identify further levels, these non-dominated solutions can be temporarily removed from the original set, and steps 0 - 4 are applied to the remaining population. The result is then a set of non-dominated solutions of second (or next best) level. This new set of non-dominated solutions is then removed, and the process repeated for the remaining solutions. The procedure can be repeated until all solutions are classified into a non-dominated level. A minimum case of one non-domination level exists when no solution dominates any other solution in the set, thereby classifying all solutions of the original population into one non-dominated level (see Figure 2a). A maximum case of N (for N solutions) non-domination levels exists when there is a hierarchy of domination wherein each solution dominates one other solution (see Figure 2b).

One particular method that employs the conventional MOGA to rank solutions as described above is known as "Nondominated sorting genetic algorithm" (NSGA). The NSGA method is described by Srivinivas and Deb in "Multiobjective optimisation using nondominated sorting in genetic algorithms", Journal of Evolutionary Computation, Vol. 2, No. 3, pp. 221- 248 and enables quick convergence of the population of solutions towards nondominated regions. However, as reported by Coello Coello *(supra),* a problem with their NSGA method is that it is highly computationally expensive. This is due to the fact that the conventional MOGA method incurs a computational complexity of $O$ ($mN^3$) (where m is the number of objectives and N is the population size; see Appendix B for details).

In an attempt to address this shortcoming, Deb et al, in "A fast and elitist multi-objective genetic algorithm: NSGA-II" (In Proceedings, 6th International Conference on Parallel problem solving from nature - PPSN VI. Lecture notes in computer science 1917 Springer 2000) describe a new ranking method (NSGA-II). In NSGA-II, every solution from the population of solutions is checked, for domination, against a store of solutions. To start with, the first solution from the population is stored in a set P'. Thereafter each solution p is compared with all members of the set P', one by one. If the solution p dominates any member q of P', then solution q is removed from P'. This way non-members of the non-dominated Pareto front are deleted from P'. If solution p is dominated by any member of P', the solution p is ignored. If solution p is not dominated by any member of P' it is entered in P'. When all solutions of the population have been checked, the members of P' constitute the non-dominated set.

This method is paraphrased in the following psuedo-code:

| | |
|---|---|
| $P^1$ = find-nondominated-front (P) | |
| $P^1 = \{1\}$ | include first member in $P^1$ |
| for each $p \in P \wedge p \notin P^1$ | take one solution at a time |
| $\quad P^1 = P^1 \cup \{p\}$ | include p in $P^1$ temporarily |
| $\quad$ for each $q \in P^1 \wedge q \neq p$ | compare p with other |
| $\quad\quad$ if $p \prec q$, then $P^1 = P^1 \setminus \{q\}$ | members of $P^1$ if p |
| $\quad\quad$ else if $q \prec p$, then $P^1 = P^1 \setminus \{p\}$ | dominates a member of $P^1$, |
| | delete it if p is dominated by |
| | other members of $P^1$, do not |
| | include p in $P^1$ |

With this method the second solution is compared with only one solution in the set P' (the first solution), the third solution is compared with at most two solutions in P' and so on, meaning that there will only be a maximum of $O$ ($N^2$) domination checks. Thus NSGA-II is less computationally expensive than NSGA method.

This solution to the problem of computational complexity is not surprising, given that at least one other Multiobjective Pareto-based based method involves comparing newly generated solutions with stored solutions. For example, Knowles and Corne, in "The Pareto archived evolution strategy: a new baseline algorithm for multiobjective optimisation", in Proceedings of the 1999 Congress on Evolutionary Computation, Piscataway, New Jersey: IEEE Service Centre, 1999, 98 - 105, suggest a multi-objective evolutionary algorithm (MOEA) that compares newly generated solutions (child) with those in a store, or archive, of solutions. In this method, a child is compared with its parents, and, if the child dominates the parents the child is accepted as a next parent. However, if one of the parents dominates the child, the child is discarded and a new child is created. However, if the child and the parents do not dominate one another, the choice between child and parents is made by comparing both child and parents with an archive of best solutions found so far. Other aspects of this method are not relevant to the problems with NSGA, so no further details of the PAES method will be discussed herein. However, it is clear that, in this method, as in NSGA-II, the trend is to use an archive of solutions and select solutions on the basis of comparison with the stored solutions.

Despite the improvements associated with the NSGA-II method, the storage for these non-dominated solutions increases from O(N) to O($N^2$), so that the speed of MOGA may nevertheless be degraded.

In contrast to these known methods, embodiments of the invention do not involve comparing solutions with stored solutions. Moreover, the solution offered by embodiments of the invention is quite different from any of the so-called "Future research paths" discussed in Coello Coello *(supra).*

According to a first aspect of the present invention there is provided a network design method, wherein design of the network involves selecting network components and configuring the selected network components in accordance with network configuration parameters, and wherein said selection and configuration is constrained by a plurality of objectives, and the selected components and configured parameters are represented by a vector of values. The method comprises the steps of

receiving data identifying the performance of the vectors of values in respect of the plurality of objectives;

for each vector identifying a distance measurement between the performance of the vector, considered as a point in multidimensional objective space, and the origin of the objective space;

selecting a vector in accordance with a distance criterion, and entering the selected vector into a set of vectors;

performing a process comprising the steps of

selecting one of the remaining vectors;

identifying whether the selected remaining vector performs worse, on all objectives in respect of at least one solution in the set, and if it does, repeating the process, and if does not, adding the selected remaining vector to the set and repeating the process,

wherein the process is repeated in respect of each remaining vector, thereby identifying all vectors of equal rank to the selected vector of values.

According to another aspect of the invention, the method can be applied to a network routing method, wherein routing of data involves selecting a path through the network in accordance with network routing parameters, wherein the selection is constrained by a plurality of objectives and the selected path is represented by a vector of values. Furthermore, the method can be applied to a method of allocating resources to a task, wherein the allocation involves selecting one or more resources, for allocation to the task, in dependence on parameters of the task and parameters of the resources, wherein the allocation is constrained by a plurality of objectives and the selected resources are represented by a vector of values.

Preferably the distance criterion involves identifying a minimum distance, and the method includes sorting the vectors of values into a list in dependence on their respective associated distance measurements.

Many workers have designed methods that evaluate and use the distance between solutions per se as a basis for selection, in particular as a means of controlling and preserving diversity in a population. For example, Goldberg and Richardson *(Genetic algorithm with sharing for multi-modal function optimization,* in Genetic algorithms and their applications: Proceedings of the second international conference on Genetic algorithms (1987), pp 51 - 49, Lawrence Eribaum), have employed a method whereby the similarity of solutions in solution space is evaluated as a function of distance therebetween, and the population is divided into different subpopulations according to the degree of similarly between solutions in the possible subpopulation spaces.

While these methods do perform some reasoning based on distances, this is quite different from the form and use of distance utilized in the present invention: firstly the type of distance is different in the present invention (prior art, solution per se; invention, evaluated solution), and secondly distances are being used in a hitherto unidentified manner.

Conveniently, those vectors of values that are entered and added to the set are removed from the list, thereby modifying the list. Thereafter, a vector of values is selected from the modified list in accordance with the distance criterion and added to a second set of vectors. The process is then repeated in respect of each of the other remaining vectors of values in the modified list.

Advantageously, those vectors of values that have been added to the second set are removed from the modified list thereby generating a yet further modified list, and the steps of selecting a vector of values from the yet further modified list in accordance with the distance criterion; adding the selected vector to a further set of vector of values; and performing the process in respect of vectors of values remaining in the yet further modified list, are continually repeated, until the list is empty. In this manner, a plurality of sets of vectors of values is generated, each of which corresponds to a ranking.

Since the vector that is associated with a minimum distance is, by definition, in the first ranking set (i.e. on the Pareto front), other vectors on the Pareto front can be identified by comparing the remaining vectors with the said vector. Essentially, therefore, the vector that is associated with a minimum distance is the benchmark for the Pareto front. Moreover, once those vectors that are not dominated by the said vector, and are thus also lie on the Pareto front, have been identified and removed from the list, the first solution in the modified list will be, by definition, on the second level Pareto front, and so on for subsequent Pareto fronts.

Preferably, quality measures are then assigned to vectors of values in dependence on their set membership, and vectors are combined in accordance with the assigned quality measures, so as to generate new vectors of values (solutions to the problem).

According to a further aspect of the invention there are apparatus according to the methods recited hereinabove.

Further features and advantages of embodiments of the invention will now be described, by way of example only, and with reference to the accompanying figures, in which:

Figure 1 is a graphical representation of regions containing non-dominated solutions;
Figure 2a is a graphical representation of ***N*** non-dominated individual solutions on the first Pareto Front (only one rank);
Figure 2a is a graphical representation of ***N*** individual solutions, each on one of N Pareto Fronts (N ranks);
Figure 2c is a graphical representation of individual solutions evenly distributed on r different Pareto fronts (***r*** ranks);
Figure 3 is a schematic block diagram showing an operating environment of an embodiment of the invention;
Figure 4 is a schematic block diagram showing components of a first embodiment of the invention, generally referred to as a ranking engine;
Figure 5 is a flow diagram showing the steps involved in the method of an embodiment of the invention;
Figure 6 is a graphical representation of individual solutions to which the method of Figure 5 is applied;
Figure 7 is a schematic diagram of connections between nodes on an SDH network, which, as one of its functions, routes telephone calls between nodes; and
Figure 8 is a schematic diagram of a Passive Optical Network.

**Overview of operating environment**

Referring to Figure 3, an embodiment of the invention may be run on a server computer, as part of, or interfacing with, an optimising system 300. The optimising system may be a suite of computer programs which can either run on the server, or can be distributed over several server computers (not shown). Such an optimising system 300 is arranged to identify optimal solutions to problems having two or more objective criteria (so-called Multi-objective problems) and, in general terms, involves the following parts interoperating as described below.

The optimising system 300 comprises a solution generator 301, which is arranged to apply genetic algorithms to a population of solutions in order to generate new solutions. In the first instance, solutions can be generated randomly. Part 303, the evaluator, is arranged to receive data identifying the problem to be optimised - in particular, objectives of the problem - together with the generated solutions. The evaluator 303 is arranged to evaluate the solutions against the problem objectives and pass the evaluated solutions to an embodiment of the invention 400, which is operable to order and rank the evaluated solutions in accordance with a novel method (as described below).

The ranked solutions are then assigned a fitness value by part 305, in accordance with their ranking level, and these fitness values are used to generate new solutions by the solution generator 301. This procedure repeats itself until the evaluator 303 identifies one or more solutions that satisfy the multi-objective criteria for the problem currently being analysed.

Parts 301, 303 and 305 are generally conventional and are described, for example, in Goldberg *(supra).*

The types of problems which involve optimisation, and to which embodiments could be applied, include artificial intelligence, engineering design, scheduling (e.g. of workforce, manufacturing, timetable etc.), Integrated Circuit design, network design, routing and capacity planning, resource allocation, supply chain management, and gaming, *etc.* Examples of such problems are given in Appendix C.

**Overview of embodiments of the invention**

Embodiments of the invention are concerned with reducing the computational complexity associated with ranking solutions with respect to one another.

As stated above, the conventional MOGA method incurs a computational time of $O(mN^3)$ (where m denotes objectives, N denotes population size). The following examples illustrate the enormity of the problem: if a population size is 10, then, for two objectives, the computational time for finding non-dominated Pareto front is 2X1000; and if the population size is 1000, the time is 2X1000,000,000. Since genetic algorithms are typically applied to large-scale optimization problems, the population size is often extremely large, which means that the computational time associated with identifying the non-dominated Pareto front is too expensive to justify using the MOGA method.

Embodiments of the invention are concerned with reducing the computational complexity associated with ranking solutions in accordance with their relative dominance. By reducing the computational time associated with ranking the solutions, it is expected that such ranking processes will be adopted in optimization systems.

In overview, embodiments involve an initial ordering process, wherein the performance of a solution, on all of its objectives, is evaluated, and compared between solutions. In a preferred embodiment, the performance of a solution is evaluated by calculating the distance (in all dimensions) of the evaluated solution from a point represented by the origin of multi-objective space. The solutions are then arranged as a function of their calculated distance values.

Known methods, such as "Quicksort", "Bubble sort", "Shell sort", "Merge sort" or "Heap sort" (described in "Algorithms in C$^{++}$", third Edition, Sedgewick, 1998) can be used to order the solutions as a function of the calculated distance. The ordering of solutions is such that whichever solution is closest to the origin is placed first, and whichever solution is furthest from the origin is placed last, in, e.g., a list of the solutions. The computational time incurred by this ordering is approximately $O(N^2)$

Subsequently, the list of ordered solutions is input to a ranking process (which utilizes a conventional ranking process such as that described in NSGA). Since the first solution in the list is, by definition, on the Pareto front, then in order to identify solutions in the first level, the solutions only have to be compared against that first solution in the list. Essentially, therefore, the first solution in the list is the benchmark for the Pareto front. Moreover, once those solutions that are not dominated by the first solution, and are thus also lie on the Pareto front, have been identified and removed from the list, the first solution of those remaining in the list will be, by definition, on the second level Pareto front.

Since embodiments have removed the need to compare all solutions with all other solutions, the computational time involved with comparing solutions with the first solution in the list is now reduced to $O\,(mN^2)$, which is a significant improvement compared to other known methods.

An embodiment of the invention will firstly be described without reference to a specific problem context; the application of the invention to specific problems is described in Appendix C.

Referring to Figure 4, the server computer S1 comprises a central processing unit (CPU) 401, a memory unit 403, an input/output device 405 for connecting the server computer to a network N1; storage 407, and a suite of operating system programs 409, which control and co-ordinate low level operation of the server computer S1.

Generally an embodiment of the invention is referred to as a ranking engine 400, and comprises at least some of programs 411, 413, 415. These programs, which are described in more detail below, are stored on storage 407 and are processable by the CPU 401. The ranking engine 400 has access to sorting methods such as those described above. It is understood that each of the programs 411, 413, 415 could comprise a suite of computer programs, and is preferably written in an object-oriented programming language, such as Java™.

The programs include a program 411 for calculating distances, which receives, as input, values that are indicative of the performance of a solution on each of m objectives. The calculating program 411 then calculates the distance of an evaluated solution, in each dimension, from the origin. The programs also include a program 413 for sorting the calculating distances. The sorting program 413 receives the calculated distances as input and uses one of the afore-mentioned sorting methods (or any other suitable sorting method) to generate a list of solutions, in which the solutions are ordered as a function of distance from the origin in m-dimensional space. The programs also include a program 415 for ranking the solutions into levels, which is arranged to identify the first solution in the list, compare each of the other solutions with the first solution, and identify those that are not dominated with respect to that first solution. The ranking program 415 is arranged to remove those identified solutions from the list and repeat these processes in respect of the remaining solutions as many times as is necessary. These programs 411, 413, 415 interoperate as described below with reference to Figures 5 and 6.

At step 501, the calculating program 411 receives values indicative of the performance of N solutions on m objectives.

Figure 6 shows eight solutions, A - H, plotted in 2 dimensional space against the respective objectives. Figure 5 will be described with reference to this example, where it is assumed that the goal is to minimise an evaluated solution against two objectives. Whilst this example is concerned with minimising in respect of two objectives, Figure 6 is used as an illustrative example only, and the method described with reference to Figure 5 is applicable to maximising in respect of three or more objectives.

At step 505, the calculating program 411 evaluates, for each solution, the distance ($\boldsymbol{d_A} \ldots \boldsymbol{d_H}$) from its position in m-dimensional space, to the origin O. Thus for the example shown in Figure 6, the distance is evaluated according to the following formula:

$$d_A = (f_1(A)^2 + f_2(A)^2)^{0.5}$$

$$\ldots\ldots\ldots$$

$$d_H = (f_1(H)^2 + f_2(H)^2)^{0.5}$$

The Complexity of this calculation is ***O(N).*** Alternative methods for measuring the distance are described towards the end of the description.

At step 507, the sorting program 413 receives values $\boldsymbol{d_A} \ldots \boldsymbol{d_H}$ and applies a sorting algorithm thereto. Such sorting algorithms are well known to those skilled in the art, and described in detail in Sedgewick *(supra).* Thereafter, at step 509 the sorting program 413 orders the solutions in accordance with the distance values (it will be understood that when the solution is explicitly linked to its associated distance value calculated at step 505, this step may be implicit in the sorting step 507). The complexity of the sorting procedure varies between ***O(N*logN)*** and ***$O(N^2)$,*** depending on the type of sorting procedure employed.

After the sorting procedure, the ranking program 415 identifies 511 the first solution in the list. Referring to Figure 6, this solution, **A**, automatically becomes the first non-dominated individual of ranking level 1 (see the *Lemma* proved in Appendix A), and is added 515 to the level 1 ranking set *Rank1_ND* = [**A**]. The ranking program 415 then repeatedly compares 513 each of the other solutions ([**E B H G F D C**]) with the first solution so as to identify those that are not dominated with respect to that first solution.

Accordingly the next solution in the list, **E**, is compared with **A**. This solution is not dominated by **A**, so it is added 515 to the level 1 ranking set; *Rank1_ND* = [**A**, **E**]. The next solution in the list, **B**, is then compared with **A** and then with **E**. This solution is not dominated by **A**, but it is dominated by **E**, so it is ignored. The next solution in the list, **H**, is then compared with **A** and then with **E**. This solution is dominated by both **A** and **E**, so it is ignored. The next solution in the list, **G**, is then compared with **A** and then with **E**. This solution is neither dominated by **A** nor **E** so it is added to the level 1 ranking set. This process is repeated for solutions **F, D** and **C**, all of which are dominated by either **A, E** or **G**, so that, when all of the solutions have been compared with those solutions making up level 1 ranking set, *Rank1_ND* = [**A, E, G**], and the list now comprises solutions [**B H F D C**].

The ranking program 415 thus systematically removes those identified solutions from the list and populates a level i (at this stage, i=1) ranking set. Once the level 1 ranking set is finalised, the ranking program 415 increments i at step 517 and repeats steps 511 and 513 in respect of the modified list (here solutions [**B H F D C**]). Since the order in the list has been preserved, solution **B** is automatically a member of the level 2 ranking set. Thus *Rank2_ND* is initially [**B**]. Repeating step 513 in respect of the solution H, the ranking program 415 identifies that solution **H** is not dominated by solution **B**, and is added 515 to the level 2 ranking set. Solution **F**, however, is dominated by **B**, so is ignored. Solution **D** is not dominated by either **B** or **H** so is added to the level 2 ranking set, while solution **C** is dominated by solution **H**, so, like solution F, is ignored. At the end of step 515 (as part of the iteration step 517), level 2 ranking set =[**B H D**] and the list now comprises solutions [**F C**].

Once the level 2 ranking set has been finalised, the ranking program 415 again increments the counter i (step 519) and repeats steps 511 - 515 in respect of the modified list (here solutions [**F C**]). Since the order in the list has been preserved, solution **F** is automatically a member of the level 3 ranking set. Thus *Rank3_ND* is initially [**F**]. Repeating step 513 in respect of the solution **C**, the ranking program 415 identifies that solution **C** is not dominated by solution **F**, and is added 515 to the level 3 ranking set.

At this point the list is empty, and the ranking program 415 terminates 521.

As can be seen from the Mathematical proof provided in Appendix B, the computational complexity of this procedure is ***$O(mN^2)$.***

*Methods for measuring the distance (step 505)*

**Euclidean distance.** This is probably the most commonly chosen type of distance. It is the geometric distance in the multidimensional space and is computed as:

$$\text{distance}(x,y) = \left(\sum_i (x_i - y_i)^2\right)^{\frac{1}{2}}$$

**Squared Euclidean distance.** The squared Euclidean distance can be used to place progressively greater weight on objects that are further apart. This distance is computed as:

$$\text{distance}(x,y) = \sum_i (x_i - y_i)^2$$

**City-block (Manhattan) distance.** This distance is the total difference across dimensions. In most cases, this distance measure yields results similar to the simple Euclidean distance.
The city-block distance is computed as:

$$\text{distance}\ (x,y) = \sum_i |x_i - y_i|$$

Power distance. This distance measure enables the progressive weight, which is placed on dimensions on which the respective objectives are very different, to be varied. The power distance is computed as:

$$\text{distance}\ (x, y) = \sum_i |x_i - y_i|^p)^{\frac{1}{r}}$$

where *r* and *p* are user-defined parameters. Parameter *p* controls the progressive weight that is placed on differences on individual dimensions, and parameter *r* controls the progressive weight that is placed on larger differences between objects. If *r* and *p* are equal to 2, then this distance is equal to the Euclidean distance.

As stated above, the invention may be embodied in one or more computer programs. These programs can be contained on various transmission and/or storage mediums such as a floppy disc, CD-ROM, or other optically readable medium, or magnetic tape so that the programs can be loaded onto one or more general purpose computers or could be downloaded over a computer network using a suitable transmission medium. Embodiments of the present invention are conveniently written using the Java programming language, but it is to be understood that this is inessential to the invention. These programs can run on a server computer, which runs Microsoft Windows 2000™. The skilled person would realize that the programs could run on other types of computers, such as Personal Computers, Workstations, Apple MacIntosh Computers, Personal Digital Assistants, which run operating systems such as Windows™, Unix™, Linux™, Solaris™, MacOS™, PalmOS™.

APPENDIX A

***Lemma****:* Given a problem for minimisation of *m* objectives, the solution with the shortest distance to the origin of *m*-dimensions coordinate system is a non-dominated solution in current population.

This Lemma also holds for the maximisation problem.

***Proof:***

Suppose an solution P $(p_1, p_2, ..., p_m)$ has the shortest distance to the origin of *m*-dimensions coordinate system, therefore, $d_p = \{p_1^2 + p_2^2 + ... + p_m^2)^{0.5}$ is the minimum distance value for all solutions in the current population.

Assume there exists another solution Q $(q_1, q_2, ..., q_m)$ which is dominated P, then we have: ($p_1 > q_1$, ; $p_2 > q_2$; ..., $p_m > q_m$) according to the definition of non-domination described in section 1. Therefore, $d_q = (q_1^2 + q_2^2 + ... + q_m^2)^{0.5} < d_p$. The conclusion conflicts with the claim that P has the shortest distance $d_p$, that means another solution Q which dominated P does not exist. P is the non-dominated solution.

Q.E.D

APPENDIX B

Conventional MOGA:

In order to sort a population of size **N** according to the layer of non-domination, each solution must be compared with every other solution in the population to see if it is non-dominated. This procedure requires **O(mN)** tests for every solution. The overall number of solutions is **N**, therefore the determination of the first non-dominated front is **O($mN^2$).** The procedure continues to find the next level front. As can be seen from Figures 1 a, 1 b, 1 c, the number of Pareto fronts layers varies from 1 to **N**-2, **N**-1, **N**, so in order to find the **N** layers of Pareto fronts (the worse case in Figure 2c), this procedure requires **O(N)** comparisons for every layer. The complexity of this approach is **O($mN^3$)**.

MOGA according to embodiments of the invention

The computational complexity associated with steps 505 and 507 as respectively **O(mN)** + **O($mN^2$).**

The complexity associated with steps 511 and 513 can be derived with reference to Figure 2b. To find all solutions in the first layer of Pareto front may cost **O(mN * N / r)**. Since the first non-dominated solution is pre-calculated (the inevitable result of the sorting process, step 507), the other solutions just have to compare with maximum (**N / r**) non-dominated solutions instead of **N** solutions in conventional MOGA to see if it is non-dominated in the current population. This procedure is repeated **r** times in order to find r layers of Pareto fronts. Therefore the general complexity becomes **O(mN * N / r) * O(r) = O($mN^2$).**

Moreover, if we assign **r** to be 1 or **N**, as indicated in Figure 2a and Figure 2c, the computational complexity

**O(mN²)** still holds.

Therefore the overall computational complexity for MOGA according to embodiments of the invention is:

$$O(mN) + O(mN^2) + O(mN^2) = O(mN^2)$$

**Q.E.D**

APPENDIX C

*Overview of problems in which an embodiment is used*

*Offline routing problem*

This problem is fully described in Knowles J, Oates M, Corne D: *Advanced multi-objective evolutionary algorithms applied to two problems in telecommunications,* BT Technology Journal, vol.**18**, no.**4**, pp 41-65, Oct. 2000. Essentially, it is a network routing problem that attempts to minimise both the number of links where the demand exceeds the bandwidth, and communication costs associates with the use of each link.

Figure 7 shows a network G, having nodes d 701 and links e 703 therebetween, where d belongs to a set D of nodes, and e belongs to the set E of links. Communication signals are routed through the network G by routing data which is usually stored at the nodes. In a traditional voice-carrying network, the nodes (or "switches") are provided with routing tables and voice signals are routed at each node towards the next node along a predetermined route to a destination such as the local exchange for a dialled number. The routing tables will include preferred routing data plus secondary routing data if the preferred route is not available due to congestion or failure for instance.

To change the routing, the nodes are reconfigured by updating the routing data at the nodes.

It is known to use shortest path routing between end points in the network. However, other factors can be very important, particularly in more complex communications environments in which both voice and data need to be accommodated. Furthermore, the data requirements can vary from narrow bandwidth to something sufficient to support interactive and visual environments.

Each link 703 has a bandwidth b(e) and a cost c(e) associated therewith, and each of the links 703 are bi-directional. In a traditional telephone network, when a connection is requested, the network attempts to assign a circuit of fixed bandwidth between the source and destination e.g. node 1 and node 5, implemented by means of the routing data. In a data network, the routing for a communications signal is more flexible. The data may for instance be carried in a series of packets, which in practice follow different routes through the network and have to be buffered at the receiving end so that they can be ordered consecutively before being delivered to the user. However, there will still be predefined constraints on routing, for instance to minimise the traffic by selecting shortest paths as far as possible. This also arises in virtual private networks where specified routes are assigned in software to virtual networks for the use of specific customers.

Routing of calls may thus be taken on different timescales, either real-time routing or offline routing. In real-time routing, connections are routed on a moment-by-moment basis, and in offline routing connections are booked in advance. The latter has practical benefits, as a network provider can use predetermined traffic profile information to marry connection requirements with bandwidth availability. As a result, quality of service can be guaranteed and fewer communications fail, such as voice calls having to be turned away (i.e. fewer callers receiving the "engaged" tone).

The offline routing problem, to which embodiments of the present invention can be applied, can be expressed as follows: to route multiple traffic requests r such that:

a) no link is over-capacitated,
b) communications costs associated with use of a link are minimised, and
c) link utilisations are all below a specified, fixed target utilisation,

and therefore addresses 3 objectives of the offline routing problem.

The bandwidth capacities of links in the network are of two types: a backbone type, having a capacity of 64 units (nodes 1 and 4 in Figure 7), and a local type having, a capacity of 16 units (nodes 2, 3, 5-8). This may conveniently be expressed in the form (using standard set notation):

$\{b(e)|e \in E\}$ lie in $\{16, 64\}$

For a set Q of q communications which must be routed over network G, each communication $q \in Q$ specifies a source node v(q) and w(q) (e.g. nodes 1 and 5 in Figure 7). Associated with each communication r, there is also a connection time $T_i(q) \in T$, a disconnection time $T_j(q) \in T$, and a communication bandwidth h(q).

Table 1:

| Summary of terms | | |
|---|---|---|
| **SYMBOL** | **DESCRIPTION** | **REPRESENTATION ON FIGURE 3** |
| G | Network | G |
| D, d | Set of nodes, individual node | 701 |
| E, e | Set of links, individual link | 703 |
| Q, q | Set of communication requests, individual comms request | |
| u | Target utilisation for link | |
| X,x | Set of feasible solutions, a solution | |
| X*, x* | Set of Pareto optimal solutions, a Pareto optimal solution | |
| v(q) | source node | 1 |
| w(q) | destination node | 5 |
| h(q) | communication bandwidth | |
| b(e) | link bandwidth | |
| c(e) | cost associated with link e | |
| f(e) | total traffic on link e | |
| t(v, w) | traffic between nodes v and w | |
| P(v, w) | Path between nodes v and w | 705 |
| T; Tj, Tj | Set of time frames; time to connect call, time to disconnect call | |

For each v, w ∈ D there is an amount of network traffic, t(v, w), which must be routed from v (node 1) to w (node 5) in the network. This traffic must all be routed on the same path P(v, w) which has to be determined.

Objective a ($f_1$):

Total traffic which must not exceed the bandwidth of a link: for all $e \in E, f(e) \leq b(e)$, and can be achieved by minimising the deviation between f(e) and b(e):

$$\min \sum_{m \in E} \max\{f(e) - b(e), 0\}$$

Equation 1

Objective b ($f_2$):

For all possible source/destination pairs, cost of routing all traffic t(v, w) on path P(v, w) between v and w:

$$\min \sum_{v,w \in D} \{t(v,w) \times \sum_{e \in P(v,w)} c(e)\}$$

Equation 2

Objective c ($f_3$):

Minimise deviation from target utilisation, u, for each link in the network:

$$\min \sum_{m \in E} \max\{f(e) - \frac{u \times b(e)}{100}, 0\}$$

Equation 3

The three objective functions defined above thus provide individual components $f_1(x)$, $f_2(x)$, $f_3(x)$ (in this case 3 because there are 3 objectives), for which a Pareto optimal set of solutions, $X^* \subseteq X$, is to be found. As will be recalled from the above glossary description, the Pareto set comprises a wide collection of diverse solutions, where no single solution dominates another in the set.

As can be seen from Figure 3, embodiments of the invention operate post solution evaluation stage, on the basis of the values of $f_1(x)$, $f_2(x)$, $f_3(x)$, and rank solutions (x) in accordance with the values of, respectively $f_1(x)$, $f_2(x)$, $f_3(x)$ as described above with reference to Figure 5.

Thus a solution to the routing problem is a vector X, which involves the path that the connection takes. Each solution is expressed as a chromosome, and each gene position within a chromosome corresponds to a path between 2 points in the network (v, w). Such a path is typically predetermined for each pair of source and destination nodes, such that a "lookup table" is created for each pair of nodes, listing, in ascending order, the cost, bandwidth and link utilisation, between source node v and destination node w. Table 2 shows a typical lookup table for cost only of a call to be routed between nodes 1 and 5, based on the node inter-connectivity of the network shown in Figure 8.

Table 2

| **Cost** | **Order** | **Path between nodes 1&5** |
|---|---|---|
| 4+3+2=9 | 1 | 1,7,6,5 |
| 3+2+1+4+3=13 | 2 | 1,2,8,3,4,5 |
| 4+3+4+3=14 | 3 | 1,7,6,4,5 |
| 3+4+4+3=14 | 4 | 1,2,3,4,5 |
| 3+2+4+3+2=14 | 5 | 1,2,8,7,6,5 |
| 4+4+1+4+3=16 | 6 | 1,7,8,3,4,5 |
| 3+2+1+4+4+2=16 | 7 | 1,2,8,3,4,6,5 |
| 3+4+4+4+2=17 | 8 | 1,2,3,4,6,5 |
| 3+4+1+4+3+2=17 | 9 | 1,2,3,8,7,6,5 |
| 3+2+4+3+4+3=19 | 10 | 1,2,8,7,6,4,5 |
| 4+4+2+4+4+3=21 | 11 | 1,7,8,2,3,4,5 |
| 3+4+1+4+3+4+3=22 | 12 | 1,2,3,8,7,6,4,5 |

*Network design problem*

Another problem includes network design - specifically design of a Passive Optical Network (PON). A PON includes Optical Line Termination (OLT) equipment, splitters and fibres, which are used to serve the customers (end users of the network). OLT and splitters are receiving devices, which are accommodated at a location known as the Host. Figure 8 shows an overview of a possible physical PON network topology, where the OLT, splitters, and a few customers are connected in a hierarchical manner with respect to one another. For example, one OLT can support a number of splitters based on its own capacity, whilst a splitter can connect with a number of customers based on its own capacity. The OLT, splitter and customers can be co-located together or can be located at different locations.

The capacity of devices has a bearing on their cost, so that the greater the capacity of a device, the higher its associated cost. A first cost is called installation cost, and is determined by the company that manufactures the devices. A second cost, known as Host cost, is associated with the Maintenance and Operations of the network devices. In addition, the fibre has a cost associated therewith, which is dependent on its actual length and affects both the installation cost and host cost.

The type of fibre that is used to connect splitters with customers is different from that which is used to connect OLTs with splitters.

The PON design problem is to determine how many, and which type of, splitters and OLT to select, where to locate them and how to connect them in an "optimal" way, given a traffic demand estimate and geographical location of customers, the capacity and associated cost of different type of splitter, the cost of fiber and OLT, and Host cost for fibres, splitters and OLT within five years. There are three conflicting objectives:

installation cost ($f_1$): Min Ic = $\sum OLT\ cost + \sum Splitter\ cost + \sum Fiber\ cost$

Where

$\Sigma$*OLTcost* is the overall cost of selected OLTs
$\sum$*Splitter* cost is the overall cost of selected splitters
$\Sigma$*Fiber cost* is the overall cost of used fibers (the price per unit times their length)

Host cost ($f_2$): Min Hc = $\sum OLTHc + \sum SplitterHc + \Sigma FiberHc$

$\Sigma$*OLTHc* is the overall maintenance and operational cost of selected OLTs
$\Sigma$*SplitterHc* is the overall maintenance and operational cost of selected splitters
$\Sigma$*FiberHc* is the overall maintenance and operational cost of used fibers

Utilisation ($f_3$): Max $T_d$ = $\Sigma traffic\text{-}demand$ (the overall traffic demand for all connected customers)

As for the network routing problem, embodiments of the invention operate on evaluated solutions - $f_1(x)$, $f_2(x)$, $f_3(x)$ - and rank solutions (x) in accordance with the values of, respectively $f_1(x)$, $f_2(x)$, $f_3(x)$ as described above with reference to Figure 5. A solution to the network design problem (vector X) describes the location and connectivity between OLT, splitters and customers.

The off-line routing problem and the PON design problem are two examples of a class of problems that may be generalized in terms of their components and the function of those components. In general, these problems have a plurality of nodes and communication channels between at least some of the nodes, and data is transferred from a source to a destination via various communication channels in accordance with routing logic that is utilised by the nodes.

In addition, and as stated earlier in the description, embodiments of the invention could be applied to multi-objective problems involving artificial intelligence, manufacturing scheduling, supply chain management, timetable scheduling, engineering design, semiconductor design, network design, capacity planning, routing and operational management, resource allocation, radio frequency assignment etc.

In the case of resource allocation problems, a solution (x) will involve, for each task for which resources are required, one or more resources, and, if the allocation forms part of a schedule, times at which the resources are allocated to the task.

## Claims

**1.** A network design method, wherein design of the network involves selecting network components and configuring the selected network components in accordance with network configuration parameters, wherein said selection and configuration is constrained by a plurality of objectives, and the selected components and configured parameters are represented by a vector of values, the method comprising the steps of
receiving data identifying the performance of the vectors of values in respect of the plurality of objectives;
for each vector identifying a distance measurement between the performance of the vector, considered as a point in multidimensional objective space, and the origin of the objective space;
selecting a vector in accordance with a distance criterion, and entering the selected vector into a set of vectors;
performing a process comprising the steps of
selecting one of the remaining vectors;
identifying whether the selected remaining vector performs worse, on all objectives in respect of at least one solution in the set, and if it does, repeating the process, and if does not, adding the selected remaining vector to the set and repeating the process,
wherein the process is repeated in respect of each remaining vector, thereby identifying all vectors of equal rank to the selected vector of values.

**2.** A network routing method, wherein routing of data involves selecting a path through the network in accordance with network routing parameters, wherein the selection is constrained by a plurality of objectives and the selected path is represented by a vector of values, the method comprising the steps of:

receiving data identifying the performance of the vectors of values in respect of the plurality of objectives;
for each vector identifying a distance measurement between the performance of the vector, considered as a point in multidimensional objective space, and the origin of the objective space;
selecting a vector in accordance with a distance criterion, and entering the selected vector into a set of vectors;
performing a process comprising the steps of
selecting one of the remaining vectors;
identifying whether the selected remaining vector performs worse, on all objectives in respect of at least one solution in the set, and if it does, repeating the process, and if does not, adding the selected remaining vector to the set and
repeating the process,

wherein the process is repeated in respect of each remaining vector, thereby identifying all vectors of equal rank to the selected vector of values.

**3.** A method of allocating resources to a task, wherein the allocation involves selecting one or more resources, for allocation to the task, in dependence on parameters of the task and parameters of the resources, wherein the allocation is constrained by a plurality of objectives and the selected resources are represented by a vector of values, the method comprising the steps of:

receiving data identifying the performance of the vectors of values in respect of the plurality of objectives;
for each vector identifying a distance measurement between the performance of the vector, considered as a point in multidimensional objective space, and the origin of the objective space;
selecting a vector in accordance with a distance criterion, and entering the selected vector into a set of vectors;
performing a process comprising the steps of
selecting one of the remaining vectors;
identifying whether the selected remaining vector performs worse, on all objectives in respect of at least one solution in the set, and if it does, repeating the process, and if does not, adding the selected remaining vector to the set and repeating the process,

wherein the process is repeated in respect of each remaining vector, thereby identifying all vectors of equal rank to the selected vector of values.

**4.** A method according to any one of claims 1, 2 or 3, in which the distance criterion involves identifying a minimum distance, and the method includes sorting the vectors of values into a list in dependence on their respective associated distance measurements.

**5.** A method according to claim 4, in which those vectors of values that are entered and added to the set are removed from the list, thereby modifying the list.

**6.** A method according to claim 5, comprising selecting a vector of values from the modified list in accordance with the distance criterion; adding the selected vector to a second set of vectors; and repeating the process in respect of each of the other remaining vectors of values in the modified list.

**7.** A method according to claim 6, including removing those vectors of values that have been added to the second set from the modified list so as to generate a yet further modified list, and continually repeating, until the list is empty, the steps of selecting a vector of values from the yet further modified list in accordance with the distance criterion; adding the selected vector to a further set of vector of values; and performing the process in respect of vectors of values remaining in the yet further modified list, thereby generating a plurality of sets of vectors of values, each of which corresponds to a ranking.

**8.** A method according to any one of the preceding claims, including assigning quality measures to vectors of values in dependence on their set membership.

**9.** A method according to claim 8, including selecting vectors of values in dependence on their set membership and combining the selected vectors in accordance with the assigned quality measures, so as to generate new vectors of values.

**10.** Network design apparatus, wherein design of the network involves selecting network components and configuring the selected network components in accordance with network configuration parameters, wherein said selection and configuration is constrained by a plurality of objectives, and the selected components and configured parameters are represented by a vector of values, apparatus comprising
receiving means arranged to receive data indicative of the performance of the vectors of values in respect of the plurality of objectives;
calculating means arranged to calculate a distance measurement between the performance of a vector, considered as a point in multidimensional objective space, and the origin of the objective space;
processing means arranged to select a vector of values in accordance with a distance criterion, and to enter the selected vector into a set;
identifying means arranged to select one of the remaining vectors and to identify the performance of the selected remaining vector in respect of at least one solution in the set,
wherein, in use, the apparatus is arranged such that
for each vector of values the calculating means identifies a distance measurement between the performance of the vector, considered as a point in multidimensional objective space, and the origin of the objective space;
the processing means selects a vector in accordance with the distance criterion; and enters the selected vector of values into a set of vectors of values;
and the identifying means performs a process comprising the steps of
selecting one of the remaining vectors;
identifying whether the selected remaining vector performs worse, on all objectives in respect of at least one solution in the set, and if it does, repeating the process, and if does not, adding the selected remaining vector to the set and repeating the process,
wherein the process is repeated in respect of each remaining vector, thereby identifying all vectors of equal rank to the selected vector of values.

**11.** Task resource allocation apparatus, wherein the allocation involves selecting one or more resources, for allocation to the task, in dependence on parameters of the task and parameters of the resources, wherein the allocation is constrained by a plurality of objectives and the selected resources are represented by a vector of values, the apparatus comprising
receiving means arranged to receive data indicative of the performance of the vectors of values in respect of the plurality of objectives;
calculating means arranged to calculate a distance measurement between the performance of a vector, considered as a point in multidimensional objective space, and the origin of the objective space;
processing means arranged to select a vector of values in accordance with a distance criterion, and to enter the selected vector into a set;
identifying means arranged to select one of the remaining vectors and to identify the performance of the selected remaining vector in respect of at least one solution in the set,
wherein, in use, the apparatus is arranged such that
for each vector of values the calculating means identifies a distance measurement between the performance of the vector, considered as a point in multidimensional objective space, and the origin of the objective space;
the processing means selects a vector in accordance with the distance criterion; and enters the selected vector of values into a set of vectors of values;
and the identifying means performs a process comprising the steps of
selecting one of the remaining vectors;
identifying whether the selected remaining vector performs worse, on all objectives in respect of at least one solution in the set, and if it does, repeating the process, and if does not, adding the selected remaining vector to the set and repeating the process,
wherein the process is repeated in respect of each remaining vector, thereby identifying all vectors of equal rank to the selected vector of values.

**12.** Apparatus according to claim 10 or claim 11, including sorting means arranged to sort a plurality of vectors of values into a list in dependence on their respective associated distance measurements.

**13.** Apparatus according to any one of claims 10 to 12, wherein the distance criterion involves identifying a minimum distance and the sorting means is arranged to sort the vectors of values in dependence on their relationship to the minimum distance.

14. A network design system arranged to perform the method according to any one of claims 4 to 9 when dependent on claim 1.

15. A processor implemented method of ranking solutions to a model of a physical system, for use in assigning a quality measure to the solutions, wherein the model is **characterised by** a plurality of objectives and the performance of the solutions in respect of the model has been evaluated in respect of the objectives, and wherein a solution is represented by a vector of values,
the method comprising the steps of
receiving data identifying the performance of the vectors of values in respect of the plurality of objectives;
for each vector identifying a distance measurement between the performance of the vector, considered as a point in multidimensional objective space, and the origin of the objective space;
selecting a vector in accordance with a distance criterion, and entering the selected vector into a set of vectors;
performing a process comprising the steps of
selecting one of the remaining vectors;
identifying whether the selected remaining vector performs worse, on all objectives in respect of at least one solution in the set, and if it does, repeating the process, and if does not, adding the selected remaining vector to the set and repeating the process,
wherein the process is repeated in respect of each remaining vector, thereby identifying all vectors of equal rank to the selected vector of values.

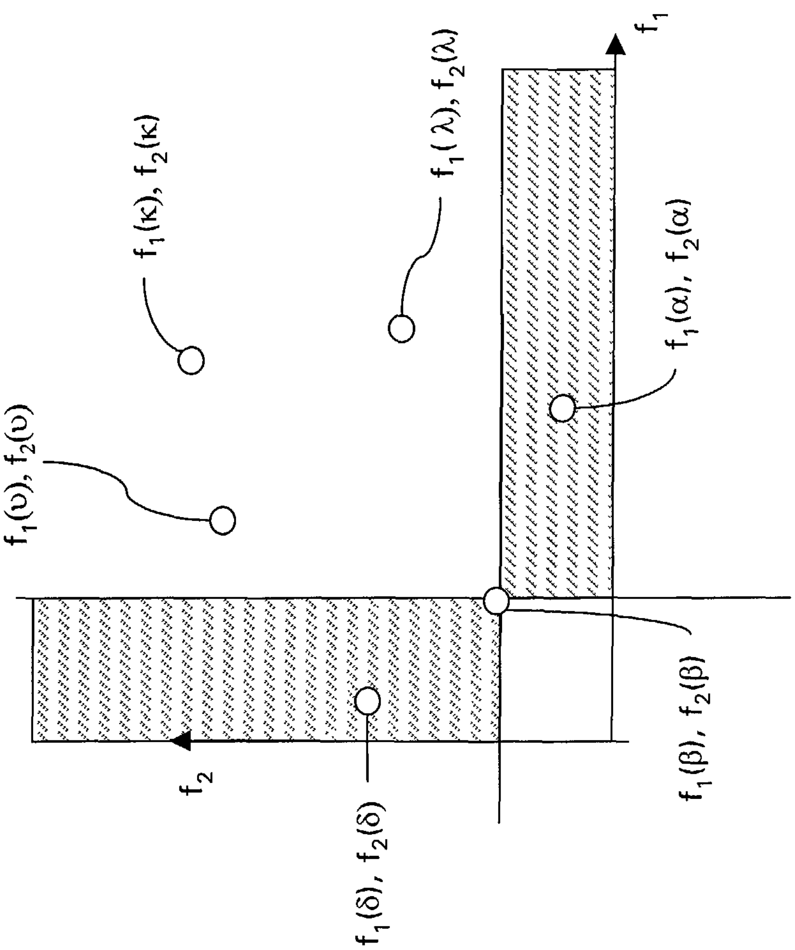

$f_1(\upsilon)$, $f_2(\upsilon)$
$f_1(\kappa)$, $f_2(\kappa)$
$f_1(\lambda)$, $f_2(\lambda)$
$f_1(\alpha)$, $f_2(\alpha)$
$f_1$
$f_2$
$f_1(\delta)$, $f_2(\delta)$
$f_1(\beta)$, $f_2(\beta)$


Figure 1

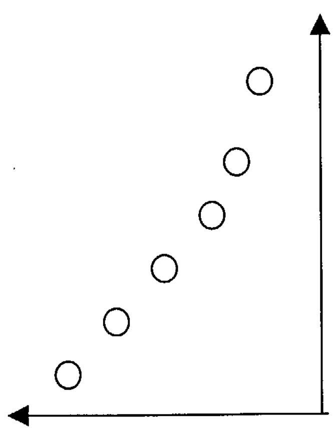

Figure 2a

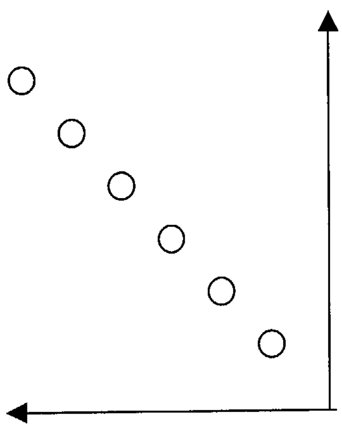

Figure 2b

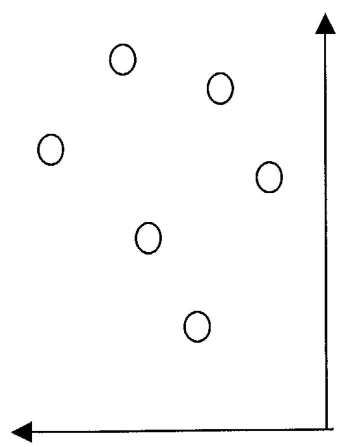

Figure 2c

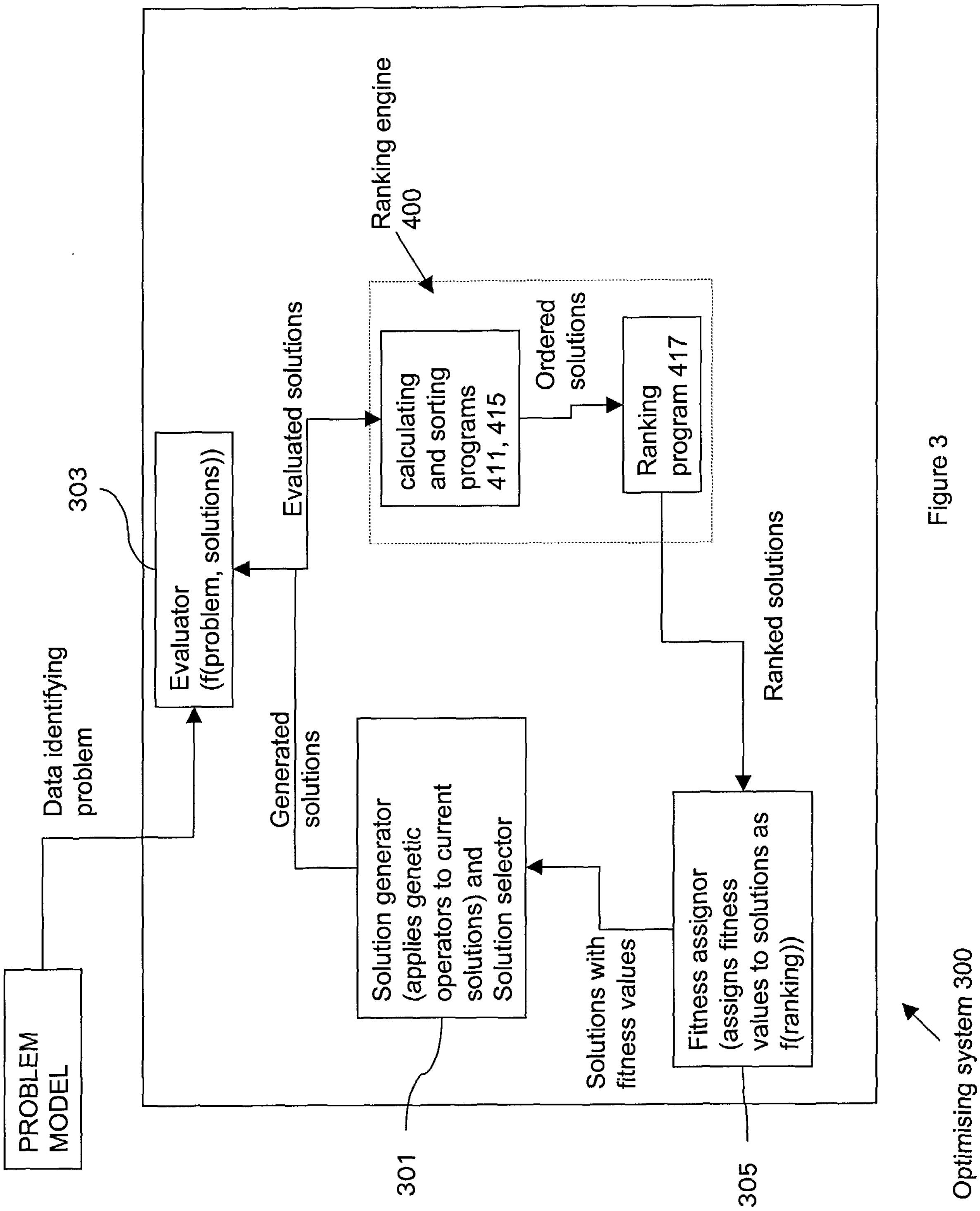
PROBLEM MODEL
Data identifying problem
303
Evaluator (f(problem, solutions))
Evaluated solutions
Ranking engine 400
calculating and sorting programs 411, 415
Ordered solutions
Ranking program 417
Ranked solutions
Generated solutions
Solution generator (applies genetic operators to current solutions) and Solution selector
Solutions with fitness values
Fitness assignor (assigns fitness values to solutions as f(ranking))
301
305
Optimising system 300

Figure 3

Fig 4

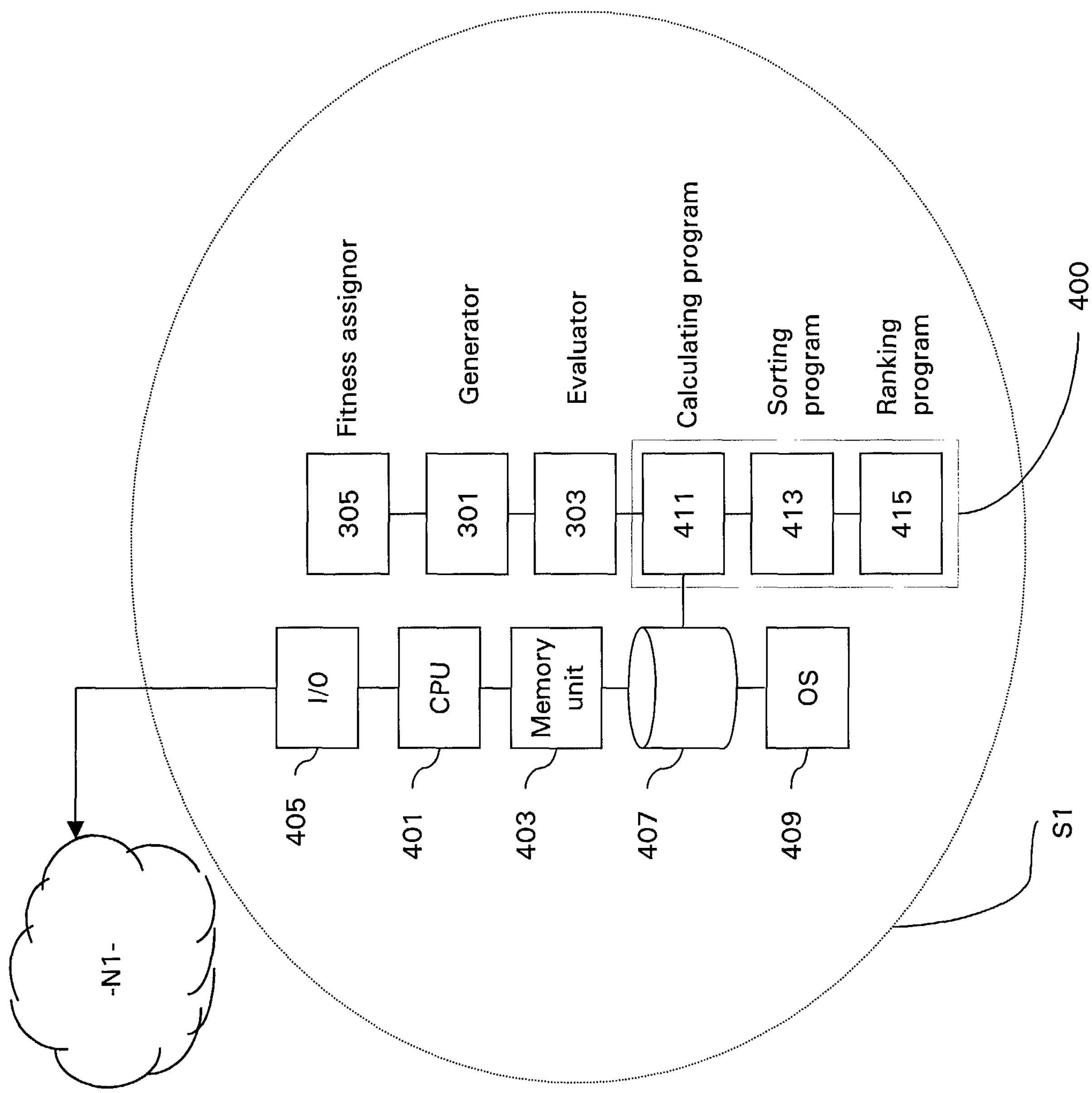
Fitness assignor
Generator
Evaluator
Calculating program
Sorting program
Ranking program
305
301
303
411
413
415
400
I/O
CPU
Memory unit
OS
405
401
403
407
409
S1
-N1-

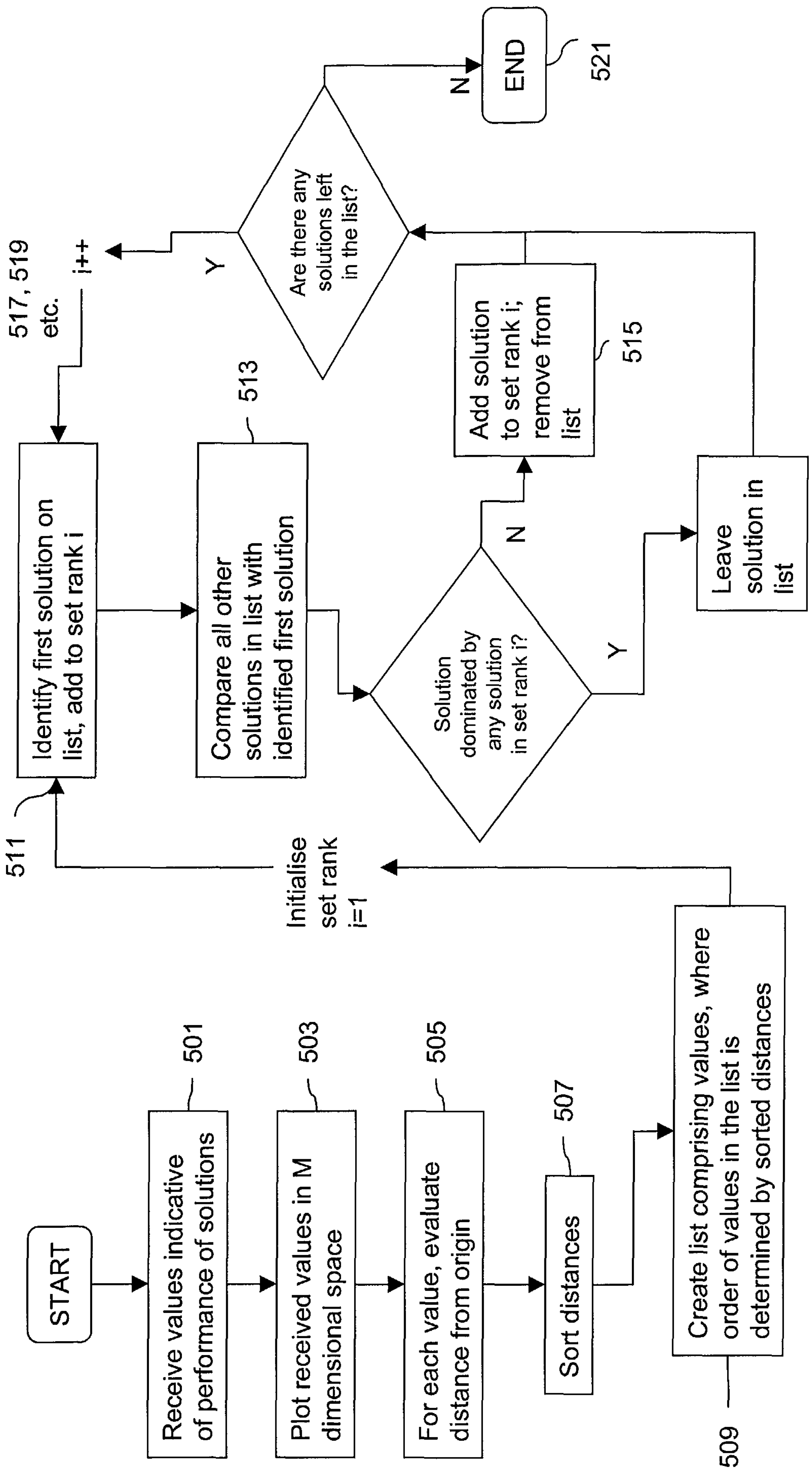
START
Receive values indicative of performance of solutions
501
Plot received values in M dimensional space
503
For each value, evaluate distance from origin
505
Sort distances
507
Create list comprising values, where order of values in the list is determined by sorted distances
509
Initialise set rank i=1
511
Identify first solution on list, add to set rank i
Compare all other solutions in list with identified first solution
513
Solution dominated by any solution in set rank i?
N
Y
Add solution to set rank i; remove from list
515
Leave solution in list
Are there any solutions left in the list?
Y
i++
517, 519 etc.
N
END
521

Fig 5

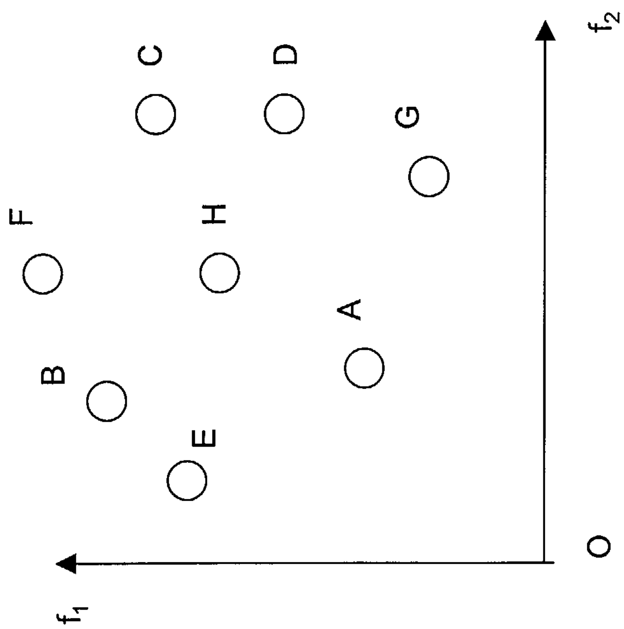


Fig 6

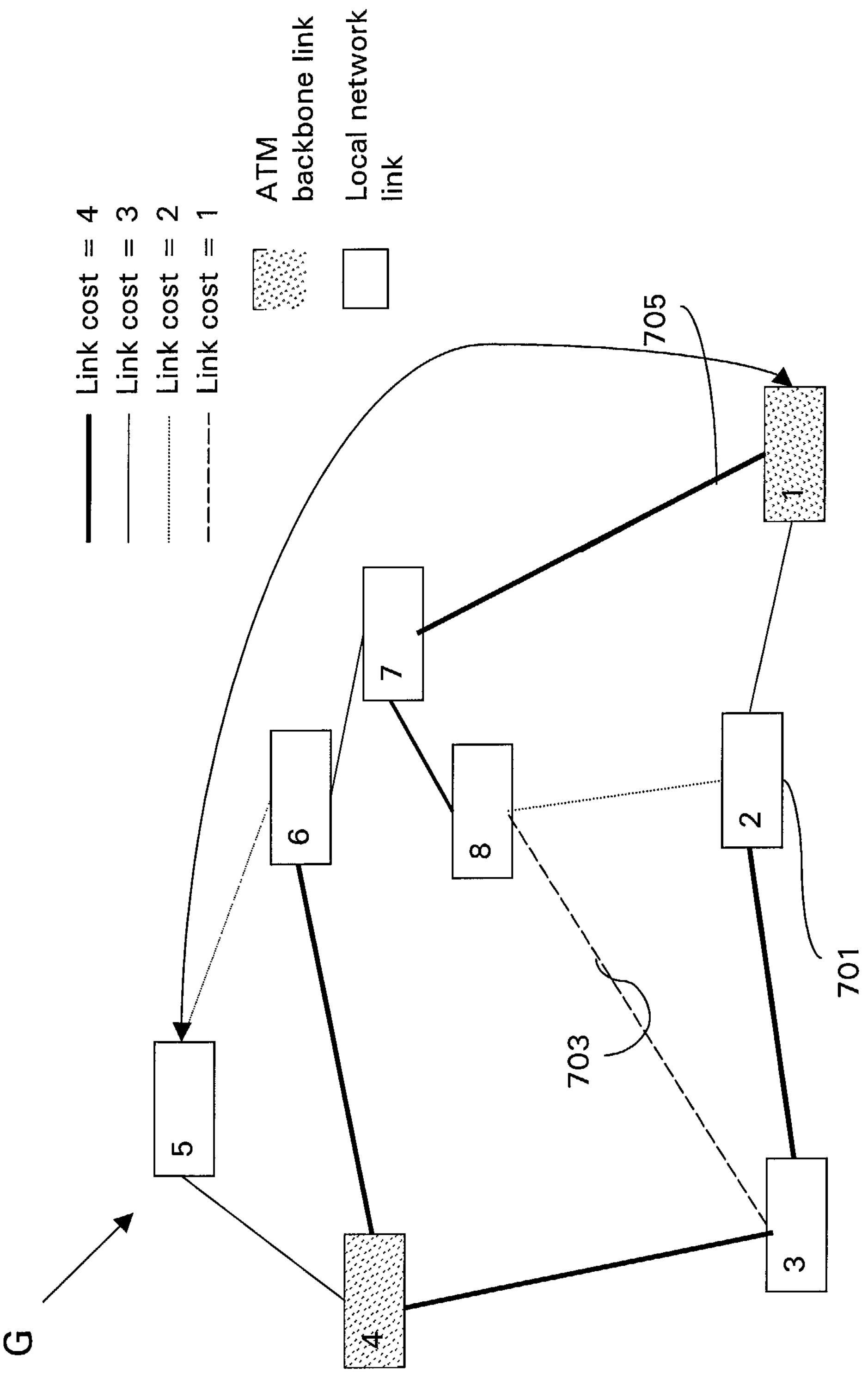
Link cost = 4
Link cost = 3
Link cost = 2
Link cost = 1
ATM backbone link
Local network link
705
1
7
6
8
2
701
703
5
3
4
G

Fig 7

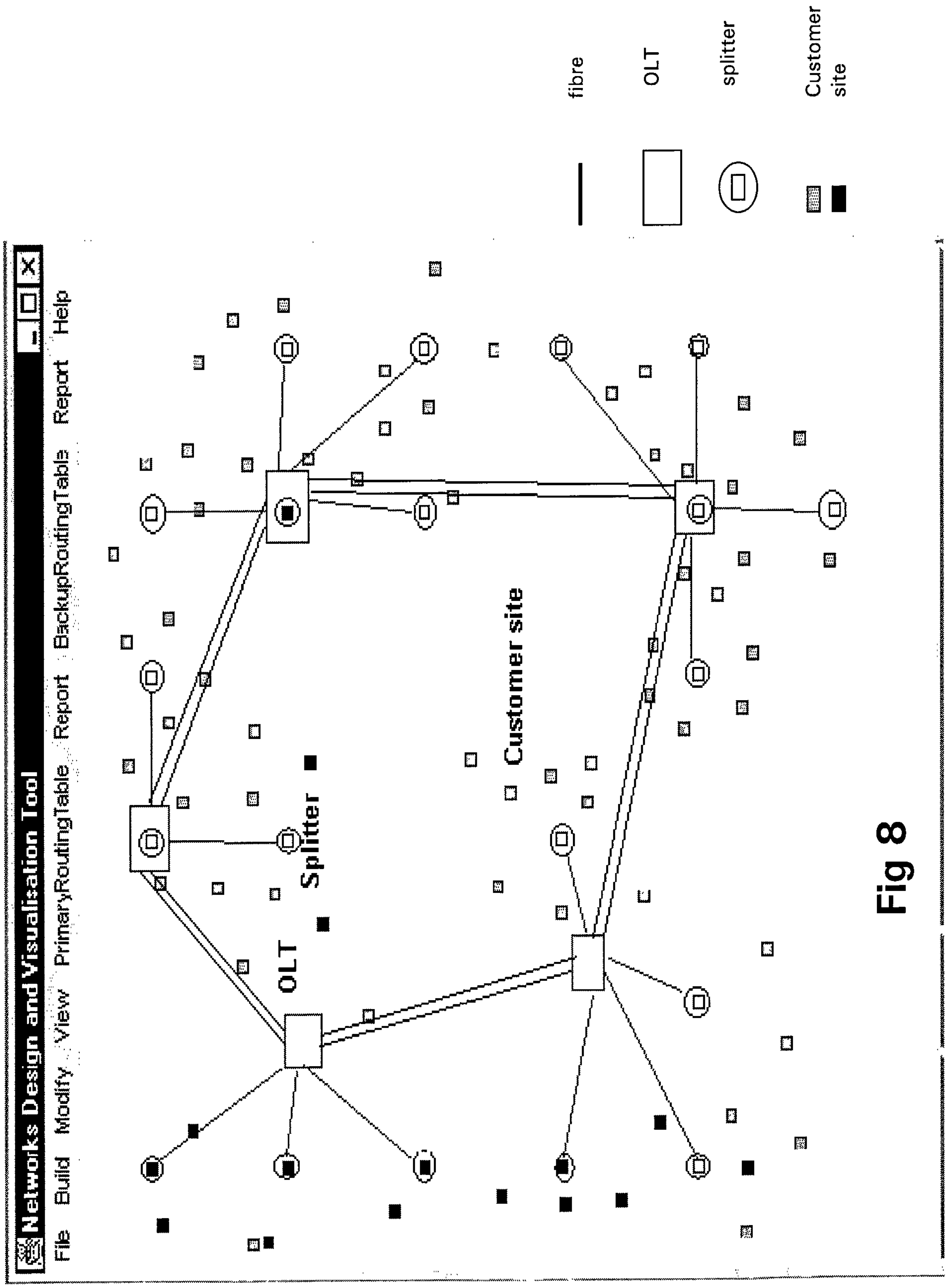
Networks Design and Visualisation Tool
File Build Modify View PrimaryRoutingTable Report BackupRoutingTable Report Help
OLT
Splitter
Customer site
fibre
OLT
splitter
Customer site

Fig 8

European Patent Office

# PARTIAL EUROPEAN SEARCH REPORT

which under Rule 45 of the European Patent Convention shall be considered, for the purposes of subsequent proceedings, as the European search report

Application Number
EP 02 25 4649

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | US 6 359 861 B1 (KAM ANTHONY C ET AL) 19 March 2002 (2002-03-19)<br>* figures 3,7 *<br>* column 2, line 28 - line 33 *<br>* column 3, line 59 - line 63 *<br>* column 4, line 10 - line 38 *<br>* column 5, line 14 - line 16 *<br>* column 7, line 1 - line 53 *<br>* column 11, line 39 - line 66 *<br>--- | 2,4-7<br><br>9 | G06F17/50<br>H04L12/56<br>G06N3/12 |
| Y<br><br>A | FISHER S E ET AL: "Pareto genetic algorithm based optimization of log-periodic monopole arrays" JOURNAL OF ELECTROMAGNETIC WAVES AND APPLICATIONS, VNU SCIENCE PRESS, UTRECHT,, NL, vol. 13, no. 15, 20 May 1999 (1999-05-20), pages 571-598, XP000956017 ISSN: 0920-5071<br>* paragraph [0005]; figure 8 *<br>---<br>-/-- | 9<br><br>2,4-7 | |
| | | | TECHNICAL FIELDS SEARCHED (Int.Cl.7)<br>G06F<br>H04L<br>G06N |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| BERLIN | 6 January 2003 | Figiel, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent Office

# INCOMPLETE SEARCH SHEET C

Application Number
EP 02 25 4649

Claim(s) searched completely:
2, 4-9 (in dependence upon claim 2 only)

Claim(s) not searched:
1,3,10-15

Reason for the limitation of the search (non-patentable invention(s)):

The subject-matter of claims 1, 3, 10-15 is excluded from the patentability within the meaning of Article 52(2a, 2c) EPC.

In claim 1 protection is sought for a network design method. The features of this claim are very general steps of a mathematical method for performing mental act of network design. The steps recited in the claim as well as the result of the claimed method, i.e. the design of the network are considered to be pure abstract nature and therefore to lack technical character.

The argumentation above applies also to the network design apparatus of claim 10.

Likewise, the method of allocating resources to a task, defined in claim 3, and the processor implemented method of ranking solution of claim 15, perform very general steps of a mathematical method has no technical character either. This argumentation applies also to the task resource allocation apparatus of claim 11.

Independent claim 14 is directed to a system for performing a method excluded from patentability (see above) without specifying any technical means therefor.

Dependent claims 12-13 do not contain technical features which could confer a technical character to the task resource allocation apparatus.

European Patent Office

# PARTIAL EUROPEAN SEARCH REPORT

Application Number
EP 02 25 4649

| DOCUMENTS CONSIDERED TO BE RELEVANT | | | CLASSIFICATION OF THE APPLICATION (Int.Cl.7) |
|---|---|---|---|
| Category | Citation of document with indication, where appropriate, of relevant passages | Relevant to claim | |
| A | WO 02 03716 A (CORNE DAVID WOLFE ;KNOWLES JOSHUA DAMIAN (GB); BRITISH TELECOMM (G) 10 January 2002 (2002-01-10)<br>* page 1, line 3 - page 5, line 6 *<br>* figure 2 *<br>* page 22, line 21 - line 30 *<br>--- | 2,4-9 | |
| A | KNOWLES J ET AL: "The pareto archived evolution strategy: a new baseline algorithm for pareto multiobjective optimisation"<br>1999 IEEE,<br>XP010344270<br>* the whole document *<br>----- | 2 | TECHNICAL FIELDS SEARCHED (Int.Cl.7) |

EPO FORM 1503 03.82 (P04C10)

## ANNEX TO THE EUROPEAN SEARCH REPORT ON EUROPEAN PATENT APPLICATION NO. EP 02 25 4649

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2003

| Patent document cited in search report | Publication date | Patent family member(s) | Publication date |
|---|---|---|---|
| US 6359861 B1 | 19-03-2002 | NONE | |
| WO 0203716 A | 10-01-2002 | AU 7027900 A<br>WO 0203716 A1 | 14-01-2002<br>10-01-2002 |

EPO FORM P0459

For more details about this annex : see Official Journal of the European Patent Office, No. 12/82